# EUROPEAN PATENT APPLICATION

(11) **EP 4 679 531 A1**
(43) Date of publication of application: **14.01.2026**
(21) Application number: 24766517.7
(22) Date of filing: 07.03.2024
(51) Int. Cl.: H01M 4/58, H01M 4/36, H01M 4/136, H01M 10/0525

(54) **COMPOSITE LITHIUM MANGANESE IRON PHOSPHATE POSITIVE ELECTRODE MATERIAL AND PREPARATION METHOD THEREFOR AND USE THEREOF**

(30) Priority: 07.03.2023 CN 202310211800
(71) Applicant: SVOLT Energy Technology Co., Ltd., Changzhou, Jiangsu 213200 (CN)
(72) Inventor: WAN, Ning, Changzhou, Jiangsu 213200 (CN); QIN, Xianxian, Changzhou, Jiangsu 213200 (CN); ZHANG, Linlin, Changzhou, Jiangsu 213200 (CN); LIU, Jing, Changzhou, Jiangsu 213200 (CN); YANG, Hongxin, Changzhou, Jiangsu 213200 (CN)
(74) Representative: Metida
(86) International application number: PCT/CN2024/080657
(87) International publication number: WO 2024/183803

(57) **Abstract**

A composite lithium manganese iron phosphate positive electrode material, and a preparation method therefor and a use thereof. The composite lithium manganese iron phosphate positive electrode material comprises a lithium iron phosphate core (1), and an iron phosphide intermediate layer (2) and a composite coating layer sequentially stacked on the surface of the lithium iron phosphate core (1), the composite coating layer comprising a lithium manganese iron phosphate material (3) coated with a carbon material (4). A unique structural design enables the positive electrode material to have excellent electrochemical performance.

## Description

This application claims the priority to Chinese patent application with an application number 202310211800.7, entitled "composite lithium manganese iron phosphate positive electrode material, and preparation method therefor and use thereof", filed to the China National Intellectual Property Administration on March 7, 2023, the entirety of which is incorporated by reference herein.

### TECHNICAL FIELD

The examples of the present application belong to a technical field of lithium-ion battery, and relate to a composite lithium manganese iron phosphate positive electrode material, and a preparation method and application thereof.

### BACKGROUND

Lithium-ion batteries are widely used energy storage devices in the fields of energy storage, power batteries, and portable electronic devices. Lithium-ion batteries have advantages such as high operating voltage, low self-discharge property, and good safety. Lithium-ion batteries are mainly composed of positive electrode material, negative electrode material, electrolyte, separator, and case. The positive electrode material mainly includes lithium cobaltate, lithium manganate, nickel manganese binary system, nickel cobalt manganese ternary system, nickel cobalt aluminum ternary system, lithium iron phosphate, lithium manganese iron phosphate, etc. Among them, lithium iron phosphate LiFePO₄ has the advantages of low cost, high safety, and good cycle life. Lithium manganese iron phosphate (LMFP, LiMn₁₋ₓFeₓPO₄) is a solid solution material composed of lithium iron phosphate and lithium manganese phosphate, which is developed based on a modification to lithium iron phosphate. It has similar properties to lithium iron phosphate and lithium manganese phosphate, with good thermal and chemical stability.

Compared to lithium iron phosphate, lithium manganese iron phosphate has a higher voltage platform. The voltage of lithium manganese iron phosphate can reach around 4.1V, while the voltage of lithium iron phosphate is around 3.4-3.5V. Both have the same theoretical gram capacity. Lithium manganese iron phosphate has a theoretical energy density of 15-20% higher than that of lithium iron phosphate under the same conditions, due to higher voltage. Meanwhile, its conductivity and lithium-ion conductivity have been improved compared to lithium manganese phosphate, thus it is a highly noteworthy positive electrode material. However, the single lithium manganese iron phosphate material has a poor conductivity, and the pure lithium manganese iron phosphate is almost an insulator, making it difficult to fully exhibit the electrochemical properties of the material. Although the conductivity of the material can be improved to a certain extent after being coated by carbon, the conductivity of the material is still poor, and the electrochemical performance of the material is still difficult to be fully exhibited.

CN106299296A discloses a lithium manganese iron phosphate material with a core-shell structure, and a preparation method and application thereof. The lithium manganese iron phosphate material with a core-shell structure includes a core and an outer shell. The chemical composition of the core is LiMn_{1-x-y}FeₓM_{y}PO₄, and the chemical composition of the outer shell is LiMnₘFe₁₋ₘ₋ₙNₙPO₄ and amorphous carbon. This material is prepared through secondary blending, secondary firing, and other steps.

CN106340639A discloses a core-shell lithium manganese iron phosphate composite positive electrode material coated with lithium iron phosphate/carbon, with a composition formula of LiMnₓFe₁₋ₓPO₄/LiMn_{y}Fe_{1-y}PO₄/LiFePO₄/C. The composition formula of the core material is LiMnₓFe₁₋ₓPO₄, the composition formula of the shell material is LiMn_{y}Fe_{1-y}PO₄, and the composition formula of the coating layer material is LiFePO₄/C.

The existing preparation methods, due to the use of pure materials to prepare lithium manganese iron phosphate, not only have problems such as high raw material prices and high costs, but also difficulty in achieving industrial production. Moreover, the electrochemical properties such as cycling performance, discharge efficiency, energy density, and tap density of the prepared lithium manganese iron phosphate positive electrode material with a core-shell structure need to be further improved, which limits its application.

### SUMMARY

The examples of the present application provide a composite lithium manganese iron phosphate positive electrode material, and a preparation method and application thereof. The composite lithium manganese iron phosphate positive electrode material has a core-shell structure, with the core being lithium iron phosphate coated with iron phosphate and the shell being a lithium manganese iron phosphate coating layer coated with carbon. The unique structural design of the lithium iron phosphate core and lithium manganese iron phosphate shell enables the composite material to have excellent electrochemical performance.

In a first aspect, the present application provides a composite lithium manganese iron phosphate positive electrode material, the composite lithium manganese iron phosphate positive electrode material includes a lithium iron phosphate core, an iron phosphide intermediate layer and a composite coating layer sequentially stacked on a surface of the lithium iron phosphate core, and the composite coating layer includes a lithium manganese iron phosphate material coated with carbon material.

In the composite lithium manganese iron phosphate positive electrode material described in the present application, the core center is lithium iron phosphate, which provides the Li ions required for capacity utilization and plays a role of high energy storage. The intermediate shell layer is iron phosphide, which can better improve the overall ion mobility of the material and optimize its kinetic performance. The outermost layer is carbon coated manganese iron phosphate lithium material, which not only reduces the direct contact between the electrolyte and the surface of the material and reduces side reactions, but also provides a manganese voltage platform, increasing the average voltage platform of the material and achieving higher energy density.

Alternatively, the iron phosphide intermediate layer has a thickness ranging from 0.5 nm to 2 nm, for example, 0.5 nm, 0.8 nm, 1 nm, 1.5 nm, or 2 nm, etc.

Alternatively, the composite lithium manganese iron phosphate positive electrode material has a median particle size D50 ranging from 0.5 µm to 1.5 µm, for example, 0.5 µm, 0.8 µm, 1 µm, 1.2 µm, or 1.5 µm, etc.

Alternatively, the composite lithium manganese iron phosphate positive electrode material has a specific surface area ranging from 13 m²/g to 15 m²/g, for example, 13 m²/g, 13.5 m²/g, 14 m²/g, 14.5 m²/g, or 15 m²/g, etc.

Alternatively, the composite lithium manganese iron phosphate positive electrode material has a grain size ranging from 90 nm to 105 nm, for example, 90 nm, 95 nm, 98 nm, 100 nm, or 105 nm, etc.

Alternatively, the composite lithium manganese iron phosphate positive electrode material has a unit cell volume ranging from 290 Å³ to 291 Å³, for example, 290 Å³, 290.2 Å³, 290.5 Å³, 290.8 Å³, or 291 Å³, etc.

Alternatively, the composite lithium manganese iron phosphate positive electrode material has a compaction density ranging from 2.3 g/cc to 2.6 g/cc, for example, 2.3 g/cc, 2.35 g/cc, 2.4 g/cc, 2.5 g/cc, or 2.6 g/cc, etc.

Alternatively, the composite lithium manganese iron phosphate positive electrode material has a tap density ranging from 0.8 g/cm³ to 1 g/cm³, for example, 0.8 g/cm³, 0.85 g/cm³, 0.9 g/cm³, 0.95 g/cm³, or 1 g/cm³, etc.

Alternatively, a mass fraction of carbon element in the composite lithium manganese iron phosphate positive electrode material is ranging from 1.5% to 1.6%, for example, 1.5%, 1.52%, 1.55%, 1.58%, or 1.6%, etc.

In a second aspect, the present application provides a preparation method for the composite lithium manganese iron phosphate positive electrode material as described in the first aspect, including the following steps:
step (1) mixing the lithium iron phosphate material with a concentrated phosphoric acid, then obtaining a precursor A from a high-temperature reduction treatment;
step (2) mixing the precursor A with a lithium source, a manganese source, an iron source, a phosphorus source, and a carbon source to obtain a precursor B;
step (3) performing a high-temperature calcination treatment to the precursor B to obtain the composite lithium manganese iron phosphate positive electrode material.

Alternatively, the concentrated phosphoric acid in step (1) has a mass concentration ranging from 70% to 95%, for example, 70%, 75%, 80%, 90%, or 95%, etc.

Alternatively, an atmosphere for the high-temperature reduction treatment in step (1) includes a hydrogen and/or a carbon monoxide.

Alternatively, a temperature for the high-temperature reduction treatment is from 500 °C to 600 °C, for example, 500 °C, 520 °C, 550 °C, 580 °C, or 600 °C, etc.

Alternatively, a duration for the high-temperature reduction treatment is from 2 h to 4 h, for example, 2 hours, 2.5 hours, 3 hours, 3.5 hours, or 4 hours.

Alternatively, the lithium source in step (2) includes lithium carbonate.

Alternatively, the manganese source includes any one or a combination of at least two of manganese carbonate, manganese sulfate, or manganese oxalate.

Alternatively, the iron source includes any one or a combination of at least two of iron sulfate, iron nitrate, or iron chloride.

Alternatively, the phosphorus source includes any one or a combination of at least two of phosphoric acid, monoammonium phosphate, or diammonium phosphate.

Alternatively, the carbon source includes any one or a combination of at least two of glucose, sucrose, starch, or polyethylene glycol (PEG).

Alternatively, an atmosphere for the high-temperature calcination treatment in step (3) includes any one or a combination of at least two of hydrogen, nitrogen, helium, neon, argon, krypton, or xenon.

Alternatively, a temperature for the high-temperature calcination treatment is from 700 °C to 750 °C, for example, 700 °C, 710 °C, 720 °C, 730 °C, 740 °C, or 750 °C, etc.

Alternatively, a duration for the high-temperature calcination treatment is ranging from 8 h to 12 h, for example, 8 hours, 9 hours, 10 hours, 11 hours, or 12 hours, etc.

In a third aspect, the present application provides a positive electrode plate, including a composite lithium manganese iron phosphate positive electrode material as described in the first aspect.

In a fourth aspect, the present application provides a lithium-ion battery, including a positive electrode plate as described in the third aspect.

### Beneficial effect

(1) In the composite lithium manganese iron phosphate positive electrode material described in the examples of the present application, the core center is lithium iron phosphate, which provides the Li ions required for capacity utilization and plays a role of high energy storage. The intermediate shell layer is iron phosphide, which can better improve the overall ion mobility of the material and optimize its kinetic performance. The outermost layer is carbon coated manganese iron phosphate lithium material, which not only reduces the direct contact between the electrolyte and the surface of the material and reduces side reactions, but also provides a manganese voltage platform, increasing the average voltage platform of the material and achieving higher energy density.

(2) The mass energy density of the battery prepared from the lithium manganese iron phosphate composite material obtained by the examples of the present application can reach 220 Wh/Kg, and the volumetric energy density is 480 Wh/L. The energy density is increased by about 10% compared with commercially available lithium manganese iron phosphate materials, and the energy density is increased by about 20% compared with commercially available lithium iron phosphate materials.

### BRIEF DESCRIPTION OF DRAWINGS

In order to more clearly illustrate the technical solution in the examples of the present application, a brief introduction will be given to the accompanying drawings used for describing the examples. It is obvious that the accompanying drawings described below are only some examples of the present application. Other accompanying drawings can be obtained by those skilled in the art based on these accompanying drawings without creative labor.

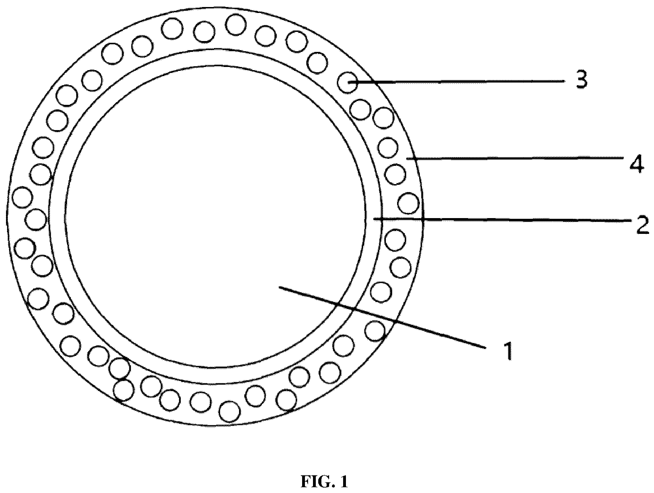

Fig. 1 is a schematic diagram of the structure of the composite lithium manganese iron phosphate positive electrode material according to Example 1 of the present application, including a lithium iron phosphate core 1, an iron phosphide intermediate layer 2, a lithium manganese iron phosphate material 3, and a carbon material 4.

### DETAILED DESCRIPTION OF THE EMBODIMENTS

The technical solution of the present application will be further illustrated through specific embodiments. It should be anticipated by those skilled in the art that the following examples are only intended to assist in understanding the present application and should not be considered as specific limit to the present application.

### Example 1

This example provides a composite lithium manganese iron phosphate positive electrode material, and a preparation method for the composite lithium manganese iron phosphate positive electrode material is as follows:
(1) A 90% concentrated phosphoric acid was reacted with lithium iron phosphate material, and a layer of iron phosphate with a thickness was formed on the surface. Then, it was calcined at 550 °C for 4 h under a hydrogen reduction atmosphere, to form an iron phosphide coating layer with a thickness of 1 nm, and a precursor A was obtained;
(2) the precursor A, manganese sulfate, iron sulfate, phosphoric acid, and glucose were stirred and mixed in a molar ratio of 0.6:0.4:1:1.5, and then a precursor B was obtained; and
(3) the precursor B was calcined at a high temperature of 720 °C for 10 hours under a nitrogen atmosphere to obtain the composite lithium manganese iron phosphate positive electrode material. A structural schematic diagram of the composite lithium manganese iron phosphate positive electrode material was shown in Fig. 1, in which 1 is the lithium iron phosphate core, 2 is the iron phosphide intermediate layer, 3 is the lithium manganese iron phosphate material, and 4 is the carbon material.

The composite lithium manganese iron phosphate positive electrode material obtained was tested for the physical and chemical properties by conventional means, and the test results were shown in Table 1:

**Table 1**

| Indicator | D10 | D50 | D90 | Dmax | Carbon content |
|---|---|---|---|---|---|
| Numerical value | 0.34 µm | 1.01 µm | 2.60 µm | 4.43 µm | 1.55% |
| pH | Specific surface area | Tap density | Compaction density | Grain size | Unit cell volume |
| 8.97 | 14.10 m²/g | 0.98 g/cm³ | 2.45 g/cc | 100.5 nm | 290.65 Å³ |

### Example 2

This example provides a composite lithium manganese iron phosphate positive electrode material, and a preparation method for the composite lithium manganese iron phosphate positive electrode material is as follows:

(1) A 70% concentrated phosphoric acid was reacted with lithium iron phosphate material, and a layer of iron phosphate with a thickness was formed on the surface. Then, it was calcined at 550 °C for 2 h under a hydrogen reduction atmosphere, to form an iron phosphide coating layer with a thickness of 0.5 nm, and a precursor A was obtained;

(2) the precursor A, manganese sulfate, iron sulfate, phosphoric acid, and sucrose were stirred and mixed in a molar ratio of 0.7:0.3:1:1.4, and then a precursor B was obtained; and

(3) the precursor B was calcined at a high temperature of 700 °C for 8 hours under a helium atmosphere to obtain the composite lithium manganese iron phosphate positive electrode material.

The composite lithium manganese iron phosphate positive electrode material obtained was tested for the physical and chemical properties by conventional means, and the test results were shown in Table 2:

**Table 2**

| Indicator | D10 | D50 | D90 | Dmax | Carbon content |
|---|---|---|---|---|---|
| Numerical value | 0.38 µm | 1.11 µm | 2.68 µm | 4.52 µm | 1.58% |
| pH | Specific surface area | Tap density | Compaction density | Grain size | Unit cell volume |
| 8.98 | 14.06 m²/g | 0.97g/cm³ | 2.42 g/cc | 100.2 nm | 290.53 Å³ |

### Example 3

This example provides a composite lithium manganese iron phosphate positive electrode material, and a preparation method for the composite lithium manganese iron phosphate positive electrode material is as follows:
(1) A 95% concentrated phosphoric acid was reacted with lithium iron phosphate material, and a layer of iron phosphate with a thickness was formed on the surface. Then, it was calcined at 600 °C for 4 h under a carbon monoxide reduction atmosphere, to form an iron phosphide coating layer with a thickness of 2 nm, and a precursor A was obtained;
(2) the precursor A, manganese oxalate, iron sulfate, monoammonium phosphate, and PEG were stirred and mixed in a molar ratio of 0.8:0.2:1:1.5, and then a precursor B is obtained; and
(3) the precursor B was calcined at a high temperature of 750 °C for 12 hours under a helium atmosphere to obtain the composite lithium manganese iron phosphate positive electrode material.

The composite lithium manganese iron phosphate positive electrode material obtained was tested for the physical and chemical properties by conventional means, and the test results were shown in Table 3:

**Table 3**

| Indicator | D10 | D50 | D90 | Dmax | Carbon content |
|---|---|---|---|---|---|
| Numerical value | 0.32 µm | 1.01 µm | 2.28 µm | 4.41 µm | 1.56% |
| pH | Specific surface area | Tap density | Compaction density | Grain size | Unit cell volume |
| 8.97 | 14.12 m²/g | 0.98 g/cm³ | 2.46 g/cc | 100.4 nm | 290.72 Å³ |

### Example 4

This example provides a composite lithium manganese iron phosphate positive electrode material, and a preparation method for the composite lithium manganese iron phosphate positive electrode material is as follows:
(1) A 85% concentrated phosphoric acid was reacted with lithium iron phosphate material, and a layer of iron phosphate with a thickness was formed on the surface. Then, it was calcined at 550 °C for 3 h under a hydrogen reduction atmosphere, to form an iron phosphide coating layer with a thickness of 1 nm, and a precursor A was obtained;
(2) the precursor A, manganese carbonate, iron nitrate, phosphoric acid, and glucose were stirred and mixed in a molar ratio of 0.7:0.3:1:1.7, and then a precursor B was obtained; and
(3) the precursor B was calcined at a high temperature of 700 °C for 8 hours under a helium atmosphere to obtain the composite lithium manganese iron phosphate positive electrode material.

The composite lithium manganese iron phosphate positive electrode material obtained was tested for the physical and chemical properties by conventional means, and the test results were shown in Table 4:

**Table 4**

| Indicator | D10 | D50 | D90 | Dmax | Carbon content |
|---|---|---|---|---|---|
| Numerical value | 0.36 µm | 1.05 µm | 2.65 µm | 4.45 µm | 1.55% |
| pH | Specific surface area | Tap density | Compaction density | Grain size | Unit cell volume |
| 8.94 | 14.22 m²/g | 0.99 g/cm³ | 2.45 g/cc | 100.3 nm | 290.68 Å³ |

### Example 5

The only difference between this example and Example 1 was that the thickness of the iron phosphide intermediate layer was controlled to be 0.3 nm, and other conditions and parameters were completely the same as Example 1.

### Example 6

The only difference between this example and Example 1 was that the thickness of the iron phosphide intermediate layer was controlled to be 2.5 nm, and other conditions and parameters were completely the same as Example 1.

### Comparative example 1

A commercial lithium manganese iron phosphate was directly used in this comparative example.

### Comparative example 2

The only difference between this comparative example and Example 1 was that a concentrated phosphoric acid was not used to treat the lithium iron phosphate material, and other conditions and parameters were completely the same as Example 1.

### Comparative example 3

The only difference between this comparative example and Example 1 was that, in step (2), a carbon source was not added, and only lithium manganese iron phosphate coating was performed. Other conditions and parameters were completely the same as Example 1.

### Comparative example 4

The only difference between this comparative example and Example 1 was that, in step (2), a carbon source was not added, and lithium manganese iron phosphate coating was not performed. Other conditions and parameters were completely the same as Example 1.

### Performance test:

The composite lithium manganese iron phosphate positive electrode material prepared in the examples and comparative examples and conductive carbon black were mixed with PVDF gel (the mass ratio of lithium iron phosphate powder: conductive carbon black: PVDF gel is 95:3:2) to obtain a positive electrode slurry. The positive electrode slurry was coated on the surface of the positive electrode current collector, and after rolling and drying, a positive electrode plate was prepared. The positive electrode plate was assembled with graphite negative electrode plate for full cell assembly verification, and the first effect and gram capacity were tested. The test results are shown in Table 5:

**Table 5**

| | 1C discharge capacity at -40 °C (Ah) | 1C discharge capacity at -20 °C (Ah) | 1C discharge capacity at 25 °C (Ah) | 2C discharge capacity at 25 °C (Ah) |
|---|---|---|---|---|
| Example 1 | 37.27 | 56.75 | 56.23 | 52.22 |
| Example 2 | 36.99 | 56.39 | 55.77 | 51.84 |
| Example 3 | 37.17 | 57.02 | 56.19 | 52.53 |
| Example 4 | 37.03 | 56.91 | 56.01 | 52.29 |
| Example 5 | 37.12 | 56.69 | 56.07 | 52.13 |
| Example 6 | 37.09 | 56.58 | 55.99 | 52.19 |
| Comparative example 1 | 12.64 | 32.52 | 40.61 | 35.76 |
| Comparative example 2 | 24.36 | 40.01 | 48.82 | 42.55 |
| Comparative example 3 | 30.62 | 51.25 | 50.73 | 43.19 |
| Comparative example 4 | 27.30 | 45.58 | 52.37 | 45.12 |

From table 1 and Examples 1-4, as can be seen that the battery prepared from the positive electrode material of the examples of the present application can achieve a 1C discharge capacity of 36.99 Ah or more at -40 °C, 56.39 Ah or more at -20 °C, 55.77 Ah or more at 25 °C, and a 2C discharge capacity of 51.84 Ah or more at 25 °C.

Comparing Example 1, and Example 5 and Example 6, it can be concluded that the thickness of the iron phosphide intermediate layer in the composite lithium manganese iron phosphate positive electrode material of the present application affects its performance. By controlling the thickness of the iron phosphide intermediate layer between 0.5 nm and 2 nm, the composite lithium manganese iron phosphate positive electrode material has a better performance. If the thickness of the iron phosphide intermediate layer is too large, the deintercalation of Li⁺ ions in the core center will be suppressed, affecting the migration rate of Li⁺ ions. If the thickness of the iron phosphide intermediate layer is too small, there will be a volume expansion of about 6.8% in the core center lithium iron phosphate during charging and discharging, and the iron phosphide intermediate layer with too small thickness is prone to breakage, which will not play the role of improving the migration rate of Li⁺ ions of the lithium iron phosphate.

Comparing Examples 1-4 and Comparative Example 1, it can be concluded that the composite lithium manganese iron phosphate positive electrode material of the examples of the present application meets the requirements of battery grade and exhibits excellent rate capability and low-temperature performance, indicating that this modified lithium manganese iron phosphate material is particularly suitable as lithium manganese iron phosphate positive electrode material of a high-performance lithium-ion battery.

Comparing Example 1 and Comparative Example 2, it can be concluded that the iron phosphide intermediate layer of the composite lithium manganese iron phosphate positive electrode material of the examples of the present application can better improve the overall ion mobility of the material and optimize its kinetic performance.

Comparing Example 1 and Comparative Examples 3-4, it can be concluded that the carbon coated lithium manganese iron phosphate material not only reduces the direct contact between the electrolyte and the material surface, thereby reducing side reactions, but also provides a voltage platform of manganese, which increases the average voltage platform of the materials, and a higher energy density is obtained.

The applicant declares that the above description is only specific embodiments of the present application, but the protection scope of the present application is not limited to this. Those skilled in the art should understand that any changes or substitutions that can be easily thought of by those skilled in the art within the scope of the disclosed technology fall within the protection scope and disclosure of the present application.

## Claims

1. A composite lithium manganese iron phosphate positive electrode material, wherein, the composite lithium manganese iron phosphate positive electrode material comprises a lithium iron phosphate core, an iron phosphide intermediate layer and a composite coating layer sequentially stacked on a surface of the lithium iron phosphate core, and the composite coating layer comprises a lithium manganese iron phosphate material coated with carbon material.

2. The composite lithium manganese iron phosphate positive electrode material according to claim 1, wherein, the iron phosphide intermediate layer has a thickness ranging from 0.5 nm to 2 nm.

3. The composite lithium manganese iron phosphate positive electrode material according to claim 1 or 2, wherein, the composite lithium manganese iron phosphate positive electrode material satisfies at least one of the following conditions:
the composite lithium manganese iron phosphate positive electrode material has a median particle size D50 ranging from 0.5 µm tol.5 µm;
the composite lithium manganese iron phosphate positive electrode material has a specific surface area ranging from 13 m²/g to 15 m²/g;
the composite lithium manganese iron phosphate positive electrode material has a grain size ranging from 90 nm to 105 nm;
the composite lithium manganese iron phosphate positive electrode material has a unit cell volume ranging from 290 Å³ to 291 Å³;
the composite lithium manganese iron phosphate positive electrode material has a compaction density ranging from 2.3 g/cc to 2.6 g/cc; and
the composite lithium manganese iron phosphate positive electrode material has a tap density ranging from 0.8 g/cm³ to 1 g/cm³.

4. The composite lithium manganese iron phosphate positive electrode material according to any one of claims 1-3, wherein, a mass fraction of carbon element in the composite lithium manganese iron phosphate positive electrode material is from 1.5% to 1.6%.

5. A preparation method for the composite lithium manganese iron phosphate positive electrode material according to any one of claims 1-4, wherein, the preparation method comprises the following steps:
step (1) mixing the lithium iron phosphate material with a concentrated phosphoric acid, then obtaining a precursor A from a high-temperature reduction treatment;
step (2) mixing the precursor A with a lithium source, a manganese source, an iron source, a phosphorus source, and a carbon source to obtain a precursor B;
step (3) performing a high-temperature calcination treatment to the precursor B to obtain the composite lithium manganese iron phosphate positive electrode material.

6. The preparation method according to claim 5, wherein, step (1) satisfies at least one of the following conditions:
the concentrated phosphoric acid has a mass concentration ranging from 70% to 95%;
an atmosphere for the high-temperature reduction treatment comprises a hydrogen and/or a carbon monoxide;
a temperature for the high-temperature reduction treatment is ranging from 500 °C to 600 °C;
a duration for the high-temperature reduction treatment is ranging from 2 h to 4 h.

7. The preparation method according to claim 5 or 6, wherein, step (2) satisfies at least one of the following conditions:
the lithium source comprises lithium carbonate;
the manganese source comprises any one or a combination of at least two of manganese carbonate, manganese sulfate, or manganese oxalate;
the iron source comprises any one or a combination of at least two of iron sulfate, iron nitrate, or iron chloride;
the phosphorus source comprises any one or a combination of at least two of phosphoric acid, monoammonium phosphate, or diammonium phosphate;
the carbon source comprises any one or a combination of at least two of glucose, sucrose, starch, or PEG.

8. The preparation method according to any one of claims 5-7, wherein, step (3) satisfies at least one of the following conditions:
an atmosphere for the high-temperature calcination treatment comprises any one or a combination of at least two of hydrogen, nitrogen, helium, neon, argon, krypton, or xenon;
a temperature for the high-temperature calcination treatment is from 700 °C to 750 °C;
a duration for the high-temperature calcination treatment is from 8 h to 12 h.

9. A positive electrode plate, wherein, the positive electrode plate comprises a composite lithium manganese iron phosphate positive electrode material according to any one of claims 1-4.

10. A lithium-ion battery, wherein, the lithium-ion battery comprises a positive electrode plate according to claim 9.
